# EUROPEAN PATENT APPLICATION

(11) **EP 4 679 852 A1**
(43) Date of publication of application: **14.01.2026**
(21) Application number: 25187685.0
(22) Date of filing: 05.07.2025
(51) Int. Cl.: H04N 23/73, H04N 23/741, H04N 23/951

(54) **SIMULTANEOUS PASSTHROUGH AND RECORDING CAPABILITIES ON A HEAD-MOUNTED DEVICE**

(30) Priority: 08.07.2024 US 202463668659 P; 17.04.2025 US 202519182462
(71) Applicant: Apple Inc., Cupertino, CA 95014 (US)
(72) Inventor: PIUZE-PHANEUF, Emmanuel, Cupertino, 95014 (US)
(74) Representative: Froud, Christopher Andrew

(57) **Abstract**

A head-mounted device (10) is provided that includes a variety of subsystems for acquiring content, displaying the content, and recording the content. A method of operating the head-mounted device (10) can include outputting passthrough content at a passthrough frame rate with one or more displays (14), activating a recording mode to capture recorded content at a recording frame rate while the one or more displays (14) are outputting the passthrough content at the passthrough frame rate, acquiring an image with one or more image sensors (50), and warping the image to produce a plurality of warped images, corresponding to different points in time, that are used to generate the passthrough content. The method can further include acquiring bracketed images associated with the image, where the bracketed images are not displayed. The images being displayed as part of the passthrough content can be enhanced using information in at least some of the bracketed images.

## Description

This application claims priority to U.S. Patent Application No. 19/182,462, filed April 17, 2025, and U.S. Provisional Patent Application No. 63/668,659, filed July 8, 2024.

### Field

This relates generally to electronic devices, including electronic devices such as head-mounted devices.

### Background

Electronic devices such as head-mounted devices can include hardware and software subsystems for performing gaze tracking, hands tracking, and head pose tracking on a user. A head-mounted device can also include front-facing cameras for acquiring a video feed of the physical environment facing the head-mounted device. The video feed can be displayed to the user as a passthrough feed.

The content that is displayed to the user may be recorded. It can be challenging to record high dynamic range content with a wide depth of field without affecting the passthrough feed. It is within such context that the embodiments herein arise.

### Summary

An aspect of the disclosure provides a method of operating a head-mounted device. The method can include outputting passthrough content at a passthrough frame rate with one or more displays, activating a recording mode to capture recorded content at a recording frame rate while the one or more displays are outputting the passthrough content at the passthrough frame rate, acquiring an image with one or more image sensors, and warping the image to produce a plurality of warped images, corresponding to different times, for the passthrough content. The warped images can be produced based on measured or predicted poses of the head-mounted device at different times. The method can further include acquiring bracketed images using adjusted image settings. The bracketed images are not displayed as part of the passthrough content.

An aspect of the disclosure provides a method of operating a head-mounted device that includes acquiring a first image with one or more cameras, warping the first image to produce reprojected versions of the first image, outputting the reprojected versions of the first image with one or more displays, acquiring bracketed images without outputting the bracketed images on the one or more displays while the reprojected versions of the first image are being displayed to the user, and generating recorded content based at least partly on the bracketed images. The method can optionally further include warping the first, second, and third bracketed images to a common point in time to produce corresponding warped bracketed images and then combining the warped bracketed images to produce a fused image for the recorded content. The method can optionally further include warping the first, second, and third bracketed images to a common point in time to produce corresponding warped bracketed images and enhancing the first image using information from at least some of the warped bracketed images.

An aspect of the disclosure provides a method of operating a head-mounted device that includes acquiring a first image and bracketed images associated with the first image with one or more cameras, storing recorded content generated based at least partly on the bracketed images with a recording pipeline, warping at least one of the bracketed images to produce at least one warped bracketed image, enhancing the first image based on the at least one warped bracketed image to produce an enhanced image, and outputting, with one or more displays, reprojected versions of the enhanced image without outputting the bracketed images. The method can optionally further include warping the at least one of the bracketed images to a point in time at which the first image is acquired. The method can optionally further include warping the at least one of the bracketed images and the first image to a common point in time after a time at which the at least one of the bracket images is acquired.

### Brief Description of the Drawings

FIG. 1 is a top view of an illustrative head-mounted device in accordance with some embodiments.
FIG. 2 is a block diagram of an illustrative head-mounted device in accordance with some embodiments.
FIG. 3 is a diagram showing illustrative display and recording pipelines that can be included within a head-mounted device in accordance with some embodiments.
FIG. 4 is a diagram illustrating how image frames can be processed for the display and recording pipelines in accordance with some embodiments.
FIG. 5 is a flowchart of illustrative steps for processing images for the display and recording pipelines in accordance with some embodiments.
FIG. 6 is a flowchart of illustrative steps for performing image enhancements for the display pipeline in accordance with some embodiments.

### Detailed Description

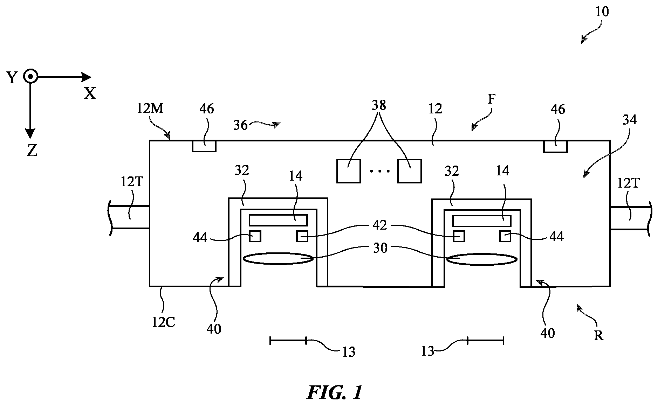

A top view of an illustrative head-mounted device (HMD) is shown in FIG. 1. As shown in FIG. 1, head-mounted devices such as electronic device 10 may have head-mounted support structures such as housing 12. Housing 12 may include portions (e.g., head-mounted support structures 12T) to allow device 10 to be worn on a user's head. Support structures 12T may be formed from fabric, polymer, metal, and/or other material. Support structures 12T may form a strap or other head-mounted support structures to help support device 10 on a user's head. A main support structure (e.g., a head-mounted housing such as main housing portion 12M) of housing 12 may support electronic components such as displays 14.

Main housing portion 12M may include housing structures formed from metal, polymer, glass, ceramic, and/or other material. For example, housing portion 12M may have housing walls on front face F and housing walls on adjacent top, bottom, left, and right side faces that are formed from rigid polymer or other rigid support structures, and these rigid walls may optionally be covered with electrical components, fabric, leather, or other soft materials, etc. Housing portion 12M may also have internal support structures such as a frame (chassis) and/or structures that perform multiple functions such as controlling airflow and dissipating heat while providing structural support.

The walls of housing portion 12M may enclose internal components 38 in interior region 34 of device 10 and may separate interior region 34 from the environment surrounding device 10 (exterior region 36). Internal components 38 may include integrated circuits, actuators, batteries, sensors, and/or other circuits and structures for device 10. Housing 12 may be configured to be worn on a head of a user and may form glasses, spectacles, a hat, a mask, a helmet, goggles, and/or other head-mounted device. Configurations in which housing 12 forms goggles may sometimes be described herein as an example.

Front face F of housing 12 may face outwardly away from a user's head and face. Opposing rear face R of housing 12 may face the user. Portions of housing 12 (e.g., portions of main housing 12M) on rear face R may form a cover such as cover 12C (sometimes referred to as a curtain). The presence of cover 12C on rear face R may help hide internal housing structures, internal components 38, and other structures in interior region 34 from view by a user.

Device 10 may have one or more cameras such as cameras 46 of FIG. 1. Cameras 46 that are mounted on front face F and that face outwardly (towards the front of device 10 and away from the user) may sometimes be referred to herein as forward-facing, front-facing, outwardly-facing, or external-facing cameras. Cameras 46 may capture visual odometry information, image information that is processed to locate objects in the user's field of view (e.g., so that virtual content may be registered appropriately relative to real-world objects), image content that is displayed in real time for a user of device 10, and/or other suitable image data. For example, forward-facing (outwardly-facing) cameras may allow device 10 to monitor movement of the device 10 relative to the environment surrounding device 10 (e.g., the cameras may be used in forming a visual odometry system or part of a visual inertial odometry system). Outwardly-facing cameras may also be used to capture images of the environment that are displayed to a user of the device 10. If desired, images from multiple outwardly-facing cameras may be merged with each other and/or outwardly-facing camera content may be merged with computer-generated content for a user.

Device 10 may have any suitable number of cameras 46. For example, device 10 may have K cameras, where the value of K is at least one, at least two, at least four, at least six, at least eight, at least ten, at least 12, less than 20, less than 14, less than 12, less than 10, 4-10, or other suitable value. Cameras 46 may be sensitive at infrared wavelengths (e.g., cameras 46 may be infrared cameras), may be sensitive at visible wavelengths (e.g., cameras 46 may be visible cameras), and/or cameras 46 may be sensitive at other wavelengths. If desired, cameras 46 may be sensitive at both visible and infrared wavelengths.

Device 10 may have left and right optical modules 40. Optical modules 40 support electrical and optical components such as light-emitting components and lenses and may therefore sometimes be referred to as optical assemblies, optical systems, optical component support structures, lens and display support structures, electrical component support structures, or housing structures. Each optical module may include a respective display 14, lens 30, and support structure such as support structure 32. Support structure 32, which may sometimes be referred to as a lens support structure, optical component support structure, optical module support structure, or optical module portion, or lens barrel, may include hollow cylindrical structures with open ends or other supporting structures to house displays 14 and lenses 30. Support structures 32 may, for example, include a left lens barrel that supports a left display 14 and left lens 30 and a right lens barrel that supports a right display 14 and right lens 30.

Displays 14 may include arrays of pixels or other display devices to produce images. Displays 14 may, for example, include organic light-emitting diode pixels formed on substrates with thin-film circuitry and/or formed on semiconductor substrates, pixels formed from crystalline semiconductor dies, liquid crystal display pixels, scanning display devices, waveguides, and/or other display components for producing images.

Lenses 30 may include one or more lens elements for providing image light from displays 14 to respective eyes boxes 13. Lenses may be implemented using refractive glass lens elements, using mirror lens structures (catadioptric lenses), using Fresnel lenses, using holographic lenses, and/or using other lens systems.

When a user's eyes are located in eye boxes 13, displays (display panels) 14 operate together to form a display for device 10 (e.g., the images provided by respective left and right optical modules 40 may be viewed by the user's eyes in eye boxes 13 so that a stereoscopic image is created for the user). The left image from the left optical module fuses with the right image from a right optical module while the display is viewed by the user.

It may be desirable to monitor the user's eyes while the user's eyes are located in eye boxes 13. For example, it may be desirable to use a camera to capture images of the user's irises (or other portions of the user's eyes) for user authentication. It may also be desirable to monitor the direction of the user's gaze. Gaze tracking information may be used as a form of user input and/or may be used to determine where, within an image, image content resolution should be locally enhanced in a foveated imaging system. To ensure that device 10 may capture satisfactory eye images while a user's eyes are located in eye boxes 13, each optical module 40 may be provided with a camera such as camera 42 and one or more light sources such as light-emitting diodes 44 or other light-emitting devices such as lasers, lamps, etc. Cameras 42 and light-emitting diodes 44 may operate at any suitable wavelengths (visible, infrared, and/or ultraviolet). As an example, diodes 44 may emit infrared light that is invisible (or nearly invisible) to the user. This allows eye monitoring operations to be performed continuously without interfering with the user's ability to view images on displays 14.

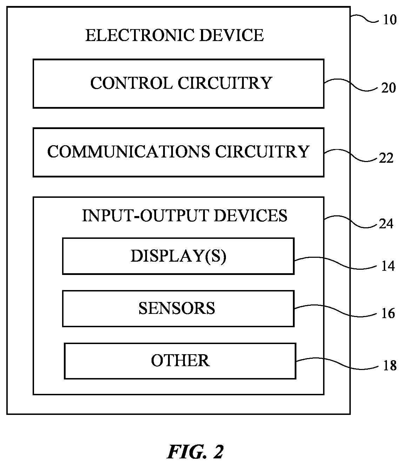

A block or schematic diagram of an illustrative electronic device such as a head-mounted device or other wearable device is shown in FIG. 2. Device 10 of FIG. 2 may be operated as a stand-alone device and/or the resources of device 10 may be used to communicate with external electronic equipment. As an example, communications circuitry 22 in device 10 may be used to transmit user input information, sensor information, and/or other information to external electronic devices (e.g., wirelessly or via wired connections). Each of these external devices may include components of the type shown by device 10 of FIG. 2.

As shown in FIG. 2, a head-mounted device such as device 10 may include control circuitry 20. Control circuitry 20 may include storage and processing circuitry for supporting the operation of device 10. The storage and processing circuitry may include storage such as nonvolatile memory (e.g., flash memory or other electrically-programmable-read-only memory configured to form a solid state drive), volatile memory (e.g., static or dynamic random-access-memory), etc. One or more processors in control circuitry 20 may be used to gather input from sensors and other input devices and may be used to control output devices. The processing circuitry may be based on one or more processors such as microprocessors, microcontrollers, digital signal processors, baseband processors and other wireless communications circuits, power management units, audio chips, application specific integrated circuits, etc. During operation, control circuitry 20 may use display(s) 14 and other output devices in providing a user with visual output and other output. Control circuitry 20 may be configured to perform operations in device 10 using hardware (e.g., dedicated hardware or circuitry), firmware, and/or software. Software code for performing operations in device 10 may be stored on storage circuitry (e.g., non-transitory (tangible) computer readable storage media that stores the software code). The software code may sometimes be referred to as program instructions, software, data, instructions, or code. The stored software code may be executed by the processing circuitry within circuitry 20.

To support communications between device 10 and external equipment, control circuitry 20 may communicate using communications circuitry 22. Communications circuitry 22 may include antennas, radio-frequency transceiver circuitry, and other wireless communications circuitry and/or wired communications circuitry. Communications circuitry 22, which may sometimes be referred to as control circuitry and/or control and communications circuitry, may support bidirectional wireless communications between device 10 and external equipment (e.g., a companion device such as a computer, cellular telephone, or other electronic device, an accessory such as a point device or a controller, computer stylus, or other input device, speakers or other output devices, etc.) over a wireless link.

For example, circuitry 22 may include radio-frequency transceiver circuitry such as wireless local area network transceiver circuitry configured to support communications over a wireless local area network link, near-field communications transceiver circuitry configured to support communications over a near-field communications link, cellular telephone transceiver circuitry configured to support communications over a cellular telephone link, or transceiver circuitry configured to support communications over any other suitable wired or wireless communications link. Wireless communications may, for example, be supported over a Bluetooth^{®} link, a WiFi^{®} link, a wireless link operating at a frequency between 10 GHz and 400 GHz, a 60 GHz link, or other millimeter wave link, a cellular telephone link, or other wireless communications link. Device 10 may, if desired, include power circuits for transmitting and/or receiving wired and/or wireless power and may include batteries or other energy storage devices. For example, device 10 may include a coil and rectifier to receive wireless power that is provided to circuitry in device 10.

Device 10 may include input-output devices such as devices 24. Input-output devices 24 may be used in gathering user input, in gathering information on the environment surrounding the user, and/or in providing a user with output. Input-output devices 24 may include one or more displays such as display(s) 14. Display(s) 14 may include one or more display devices such as organic light-emitting diode display panels (panels with organic light-emitting diode pixels formed on polymer substrates or silicon substrates that contain pixel control circuitry), liquid crystal display panels, microelectromechanical systems displays (e.g., two-dimensional mirror arrays or scanning mirror display devices), display panels having pixel arrays formed from crystalline semiconductor light-emitting diode dies (sometimes referred to as microLEDs), displays including waveguides, and/or other display devices.

Sensors 16 in input-output devices 24 may include force sensors (e.g., strain gauges, capacitive force sensors, resistive force sensors, etc.), audio sensors such as microphones, touch and/or proximity sensors such as capacitive sensors such as a touch sensor that forms a button, trackpad, or other input device), and other sensors. If desired, sensors 16 may include optical sensors such as optical sensors that emit and detect light, ultrasonic sensors, optical touch sensors, optical proximity sensors, and/or other touch sensors and/or proximity sensors, monochromatic and color ambient light sensors, image sensors (e.g., cameras), fingerprint sensors, iris scanning sensors, retinal scanning sensors, and other biometric sensors, temperature sensors, sensors for measuring three-dimensional non-contact gestures ("air gestures"), pressure sensors, sensors for detecting position, orientation, and/or motion of device 10 and/or information about a pose of a user's head (e.g., accelerometers, magnetic sensors such as compass sensors, gyroscopes, and/or inertial measurement units that contain some or all of these sensors), health sensors such as blood oxygen sensors, heart rate sensors, blood flow sensors, and/or other health sensors, radio-frequency sensors, three-dimensional camera systems such as depth sensors (e.g., structured light sensors and/or depth sensors based on stereo imaging devices that capture three-dimensional images) and/or optical sensors such as self-mixing sensors and light detection and ranging (lidar) sensors that gather time-of-flight measurements (e.g., time-of-flight cameras), humidity sensors, moisture sensors, gaze tracking sensors, electromyography sensors to sense muscle activation, facial sensors, and/or other sensors. In some arrangements, device 10 may use sensors 16 and/or other input-output devices to gather user input. For example, buttons may be used to gather button press input, touch sensors overlapping displays may be used for gathering user touch screen input, touch pads may be used in gathering touch input, microphones may be used for gathering audio input (e.g., voice commands), accelerometers may be used in monitoring when a finger contacts an input surface and may therefore be used to gather finger press input, etc.

If desired, electronic device 10 may include additional components (see, e.g., other devices 18 in input-output devices 24). The additional components may include haptic output devices, actuators for moving movable housing structures, audio output devices such as speakers, light-emitting diodes for status indicators, light sources such as light-emitting diodes that illuminate portions of a housing and/or display structure, other optical output devices, and/or other circuitry for gathering input and/or providing output. Device 10 may also include a battery or other energy storage device, connector ports for supporting wired communication with ancillary equipment and for receiving wired power, and other circuitry.

Display(s) 14 may be used to present a variety of content to a user's eye. The left and right displays 14 that are used to present a fused stereoscopic image to the user's eyes when viewed through eye boxes 13 may sometimes be referred to collectively as a display 14. As an example, real-world content may be presented by display 14. "Real-world" content may refer to images of a physical environment being captured by one or more front-facing cameras (see, e.g., cameras 46 in FIG. 1) and passed through as a live feed to the user. The real-world content being captured by the front-facing cameras is therefore sometimes referred to as a camera passthrough feed, a (live) video passthrough feed, or a passthrough video feed (content).

A physical environment refers to a physical world that people can sense and/or interact with without the aid of an electronic device. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics. In some embodiments, display 14 can be used to output extended reality (XR) content, which can include virtual reality content, augmented reality content, and/or mixed reality content. The content output on display 14 can sometimes be referred to as display frames.

It may be desirable to record the real-world passthrough content and/or the XR content that is being displayed to the user of the head-mounted device. The passthrough content, which includes only real-world content generated based on images captured by one or more outwardly-facing cameras (e.g., left and right front-facing cameras), can be recorded via an operation sometimes referred to as a "spatial capture" or "spatial recording" operation. The XR content, which includes computer-generated content blended with the real-world passthrough content, can be recorded via an operation sometimes referred to as a "mixed reality capture," "extended reality capture," "mixed reality recording," "extended reality recording," or "view capture" operation. Such recording operations can generate or produce a corresponding recording having recorded content. A spatial capture can produce a recording having only real-world content, whereas an XR capture can produced a recording having both real-world content and computer-generated (virtual) content. The content being presented on display(s) 14 can be output as display frames. The recording operation can generate a recording of the display frames.

Consider an example where a first person is using a head-mounted device. The first person can initiate a spatial capture or an XR capture to produce a corresponding recording of the display frames. The recording may be shared (in real time or after the recording is complete) with a second person (e.g., via an additional electronic device that presents the recording to the second person) or subsequently replayed by the first person. Recording and optionally sharing an in-headset experience in this way therefore allows for a more social experience, enables additional functionality, etc. A user may view a replay of the recording on a head-mounted device that is the same or similar to the head-mounted device that originally produced the recording. In other situations, a user may view a replay of the recording on a different type of device such as a cellular telephone, laptop computer, tablet computer, etc. The device presenting a replay of the recording may have a stereoscopic display or a non-stereoscopic display.

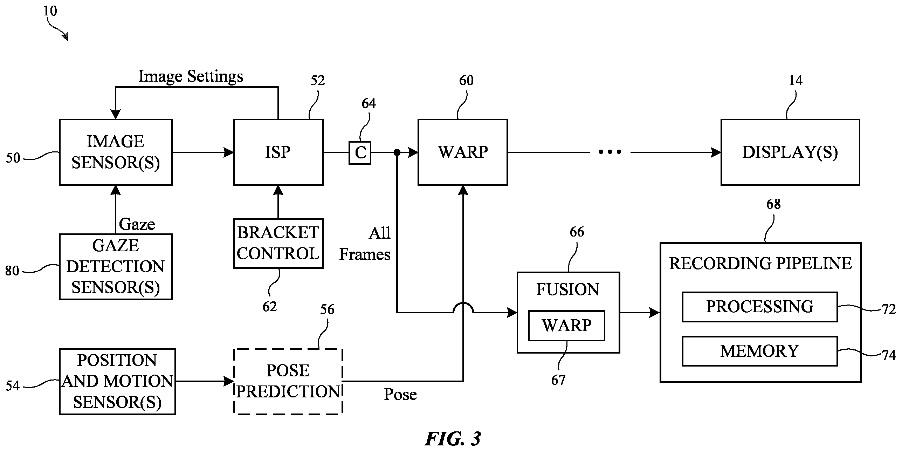

FIG. 3 is a diagram showing various hardware and software subsystems that may be included within device 10. As shown in FIG. 3, device 10 may include imaging subsystems including one or more image sensors 50, an image signal processing subsystem such as image signal processor (ISP) 52, user tracking subsystems including one or more position and motion sensors(s) 54, one or more gaze detection sensors 80, an image warping subsystem such as image warping block 60, an image fusing subsystem such as image fusion block 66, a display pipeline including one or more displays 14, and a recording subsystem such as recording pipeline 68.

Image sensor(s) 50 may include one or more front-facing camera(s) and/or other cameras used to gather information on the external real-world environment surrounding device 10. Cameras 50 may represent one or more of front-facing cameras 46 in FIG. 1. A video feed output from cameras 50 can sometimes be referred to as a raw video feed or a live video passthrough feed, a live passthrough video stream, or passthrough content. Front-facing cameras 50 are therefore sometimes referred to herein as passthrough cameras.

Such passthrough feed output from cameras 50 can be processed by image signal processor (ISP) 52 that is configured to perform image signal processing functions that only rely on the input of the live camera feed itself. For example, ISP block 52 may be configured to perform automatic exposure for controlling an exposure setting for the passthrough feed, tone mapping, autofocus, color correction, gamma correction, shading correction, noise reduction, black level adjustment, demosaicing, image sharpening, high dynamic range (HDR) correction, color space conversion, and/or other image signal processing functions to output a corresponding processed passthrough feed (e.g., a series of processed video frames). Processor 52 can output one or more image settings for adjusting or otherwise controlling image sensors 50.

Gaze detection sensors 80, sometimes referred to as a gaze tracker, may be configured to gather gaze information or point of gaze information. The gaze tracker may employ one or more inward facing camera(s) (e.g., cameras 42 in FIG. 1) and/or other gaze-tracking components (e.g., eye-facing components and/or other light sources such as light sources 44 that emit beams of light so that reflections of the beams from a user's eyes may be detected) to monitor the user's eyes. One or more gaze-tracking sensor(s) 80 may face a user's eyes and may track a user's gaze. Gaze detection sensors 80 may determine the location of a user's eyes (e.g., the centers of the user's pupils), may determine the direction in which the user's eyes are oriented (the direction of the user's gaze), may determine the user's pupil size (e.g., so that light modulation and/or other optical parameters and/or the amount of gradualness with which one or more of these parameters is spatially adjusted and/or the area in which one or more of these optical parameters is adjusted based on the pupil size), may be used in monitoring the current focus of the lenses in the user's eyes (e.g., whether the user is focusing in the near field or far field, which may be used to assess whether a user is day dreaming or is thinking strategically or tactically), and/or other gaze information. Cameras in the gaze tracker may sometimes be referred to as inward-facing cameras, gaze-detection cameras, eye-tracking cameras, gaze-tracking cameras, or eye-monitoring cameras. If desired, other types of image sensors (e.g., infrared and/or visible light-emitting diodes and light detectors, etc.) may also be used in monitoring a user's gaze.

In accordance with some embodiments, the gaze information output from gaze detection sensors 80 can be provided to image sensors 50 to determine a point of focus (e.g., for autofocusing purposes) when acquiring new images. In some embodiments, the image signal processing functions performed by ISP 52 may optionally be based on the gaze tracking information from gaze detection sensor(s) 80. For example, ISP 52 may adjust the passthrough feed based on gaze tracking information (e.g., for a foveated display), may adjust the passthrough feed to better match virtual content, etc.

Position and motion sensors 54 may include accelerometers, magnetic sensors such as compass sensors, gyroscopes, and/or inertial measurement units (IMUs) that contain some or all of these sensors. Position and motion sensors 54 may optionally include one or more cameras. The position and motion sensors 54 may track a user's head pose. The yaw, roll, and pitch of a user's head, which represent three degrees of freedom (DoF), may collectively define a user's " head orientation." The user's head orientation along with a position of the user, which represent three additional degrees of freedom (e.g., X, Y, Z in a 3-dimensional space), can be collectively defined herein as the user's "head pose." The user's head pose therefore represents six degrees of freedom. These position and motion sensors may assume that head-mounted device 10 is mounted on the user's head. Therefore, references herein to head pose, head movement, yaw of the user's head (e.g., rotation around a vertical axis), pitch of the user's head (e.g., rotation around a side-to-side axis), roll of the user's head (e.g., rotation around a front-to-back axis), etc. may be considered interchangeable with references to device pose, device movement, yaw of the device, pitch of the device, roll of the device, etc. In certain embodiments, position and motion sensors 54 may also include 6 degrees of freedom (DoF) tracking sensors, which can be used to monitor both rotational movement such as roll, pitch, and yaw and also positional/translational movement in a 3D environment.

Position and motion sensors 54 can thus be used to obtain a current head pose, sometimes simply referred to as "a pose," of device 10. Device 10 can optionally be provided with a (head) pose prediction subsystem such as pose predictor 56 configured to predict or estimate a future (head) pose of device 10. Pose predictor 56 can predict or estimate the pose of device 10 based on past or recent pose data/information. Pose predictor 56 can estimate a pose of device 10 at some future point in time. Pose predictor 56 can thus be used to output one or more predicted poses at various upcoming points in time. Pose predictor 56 is optional and can be omitted.

Although not explicitly shown, device 10 can include other types of tracking sensors such as hand tracking sensors for monitoring a user's hand motion/gesture and/or other sensors for tracking other portion(s) of body part(s) of the user.

The warping subsystem, sometimes referred to herein as a warp(ing) block 60, may be a software or hardware component configured to warp the passthrough content and/or any virtual content based on one or more warp meshes. For example, warp block or warper 60 can be configured to perform or apply geometric transformations, scaling, rotating, translating, distortions, deformations, warping, morphing, rippling, and/or other transformations or visual effects to the underlying images to manipulate the appearance of the captured image. In general, warping can involve 2-dimensional (2D) transformations or mappings that adjust the pixel locations within an image (e.g., to change the spatial arrangement of an image's pixels). Warping block 60 can also be configured to perform image reprojection based on the pose information (e.g., based on pose data output from position and motion sensors 54 or based on predicted pose data output from pose predictor 56). For example, warper 60 can perform image reprojection by mapping 3-dimensional (3D) points onto a 2D plane to help align images taken from different camera viewpoints. The warped images can then be presented as a live video (passthrough) feed to the user via one or more displays 14.

To provide device 10 with recording capabilities, device 10 may include a separate recording subsystem such as recording pipeline 68. As shown in FIG. 3, recording pipeline 68 may include a recorder processing block 72 and recorder memory 74. To provide flexibility in subsequent editing and/or replay of a recording, recording pipeline 68 may record a wide variety of information associated with a passthrough experience or an extended reality experience. In general, any parameters, metadata, raw content, and other information acquired by one or more components within device 10 may be recorded by recording pipeline 68. In addition to being provided to image signal processor 52, the raw passthrough feed, the processed passthrough feed, and/or image sensor metadata from the image sensors 50 may be provided to and recorded by the recording pipeline 68. In the example of FIG. 3, all frames being output from ISP block 52 can be temporarily stored within cache 64, sometimes referred to as an image buffer. One or more cached images can be warped by block 60 to produce reprojected images for the display pipeline. The cached images (or image frames) can optionally be processed by image fusion block 66 to selectively combine or fuse two or more image frames. Fusion block 66 can also provide image warping functions (see, e.g., warping component 67).

In some embodiments, any image signal processing (ISP) parameters used by ISP 52 (e.g., color adjustment parameters, brightness adjustment parameters, distortion parameters, and/or any other parameters used in adjusting the passthrough feed) may be provided to and recorded by recording pipeline 68. In some embodiments, virtual content output by a graphics rendering pipeline may be provided to and recorded by recording pipeline 68 (e.g., by recording the virtual content as a single layer or as multiple layers). If desired, parameters such as color adjustment parameters, brightness adjustment parameters, distortion parameters, and/or other parameters used by a virtual content compositor to generate virtual content may also be provided to and recorded by recording pipeline 68. In some embodiments, the head tracking information, gaze tracking information, and/or hand tracking information may also be provided to and recorded by recording pipeline 68. In some embodiments, a foveation parameter used in performing the dynamic foveation may also be provided to and recorded by recording pipeline 68. In some embodiments, compositing metadata associated with the compositing of the passthrough feed and the virtual content may be provided to and recorded by recording pipeline 68. The compositing metadata used and output by a media merging compositor may include information on how the virtual content and passthrough feed are blended together (e.g., using one or more alpha values), information on video matting operations, etc. If desired, audio data obtained from one or more speakers within device 10 may be provided to and recorded by the recording pipeline 68.

The information received by recording pipeline 68 may be stored in memory 74. Before or after recording the information, recording processor 72 may optionally perform additional operations such as selecting a subset of the received frames for recording (e.g., selecting alternating frames to be recorded, selecting one out of every three frames to be recorded, selecting one out of every four frames to be recorded, selecting one out of every five to ten frames for recording, etc.), limiting the rendered frames to a smaller field of view (e.g., limiting the X dimension of the rendered content, limiting the Y dimension of the rendered content, or otherwise constraining the size or scope of the frames to be recorded), undistorting the rendered content since the content being recorded might not be viewed through a lens during later playback, etc.

It may be desirable to use recording pipeline 68 to capture high dynamic range (HDR) video. To achieve high dynamic range, multiple successive images need to be acquired at different exposure levels to capture a wider range of brightness and detail. Conventionally, a single HDR image can be generated using a technique sometimes referred to as exposure bracketing. Exposure bracketing can involve acquiring an image at a nominal exposure setting, one or more images using lower exposure settings (e.g., to acquire underexposed images for capturing more detail in the highlight/brighter regions), and one or more images using higher exposure settings (e.g., to acquire overexposed images for capturing more detail in the shadow/darker regions). Operating the passthrough cameras while performing exposure bracketing can, if care is not taken, impact the overall experience of the user viewing the displayed passthrough content. Moreover, images acquired by the passthrough cameras can be focused based on the user's gaze. For example, if the user wearing device 10 is currently looking at a relatively close subject, then the background behind the subject will be out of focus and blurred. Thus, in addition to capturing high dynamic range, it may also be desirable to record content with a depth of field that is independent of the user's gaze (e.g., so that most of the recorded video is in focus, thus allowing the user later viewing the recorded video to clearly see any portion of the video).

In accordance with some embodiments, device 10 can be configured to produce passthrough content at a first (nominal) passthrough frame rate and, when a recording function/mode is enabled (e.g., when activating spatial capture or XR capture during), to record content at a second recording frame rate using recording pipeline 68 without altering the nominal passthrough frame rate. For example, the passthrough frame rate for the in-head viewing experience can be equal to 90 fps (frames per second), 96 fps, 100 fps, 120 fps, 70 fps, 75 fps, or other passthrough frame rate. The passthrough frame rate is sometimes referred to as a camera frame rate. The passthrough frame rate may be equal to a system frame rate of device 10.

The term "system frame rate" can refer to the camera frame rate (e.g., the rate at which exposures are being performed by cameras 50) and/or the display frame rate (e.g., the rate at which video frames are being output on displays 14). Device 10 may have a unified system frame rate where the camera frame rate is set equal to (or synchronized with) the display frame rate. This is exemplary. If desired, device 10 can optionally be operated using unsynchronized system frame rates where the camera frame rate is not equal to the display frame rate. In general, device 10 can be dynamically adjusted to operate among three or more different system frame rates, four or more system frame rates, 5-10 system frame rates, or more than 10 different system frame rates.

The recording pipeline 68 can record content at a recording frame rate that is different than the passthrough (system) frame rate. The "recording frame rate" can refer to and be defined herein as the frame rate employed by the recording pipeline 68 to generate a corresponding recording. In situations where the recording frame rate cannot run at the passthrough/system frame rate due to system limitations (e.g., limitations in memory bandwidth, encoder limits, power and thermal limits, etc.), the recording frame rate of the recording pipeline 68 can or should be set equal to some fraction of the camera frame rate. For example, if the camera or system frame rate is set equal to 90 fps, then the recording frame rate can be set equal to 30 fps (e.g., by capturing one out of every three frames being displayed). As another example, if the camera or system frame rate is set equal to 100 fps, then the recording frame rate can be set equal to 50 fps (e.g., by capturing one out of every two frames being displayed). In other words, the camera or passthrough frame rate can be a multiple of the recording frame rate. If the system limitations were removed, then the recording frame rate can optionally be set equal to the system frame rate. The terms "fps" and "Hz" when referring to frame rates of device 10 can be used interchangeably herein.

Device 10 can be configured to acquire an initial image frame. After the initial image frame, a number of successive image frames can be acquired at different camera settings (e.g., using different exposure levels for capturing high dynamic range, using different focus distances for capturing extended depth of field, using different color temperature settings for capturing a wider tonal range, etc.). The successive image frames acquired using the different camera settings should not be displayed to the user, which if no other action is taken, would effectively reduce the passthrough frame rate. Rather, the initial image frame and/or various versions of the initial image frame reprojected based on the user's head pose while the successive frames are being captured can instead be displayed to the user. Displaying the reprojected images can help mask the reduced passthrough frame rate. Reprojecting images for display in this way can be effective since the user is expected to be relatively stable while recording a video. Operating device 10 as such can thus be technically advantageous and beneficial to record high dynamic range video content with extended depth of field (e.g., a depth of field that is independent of the user's gaze) without degrading the in-headset passthrough experience.

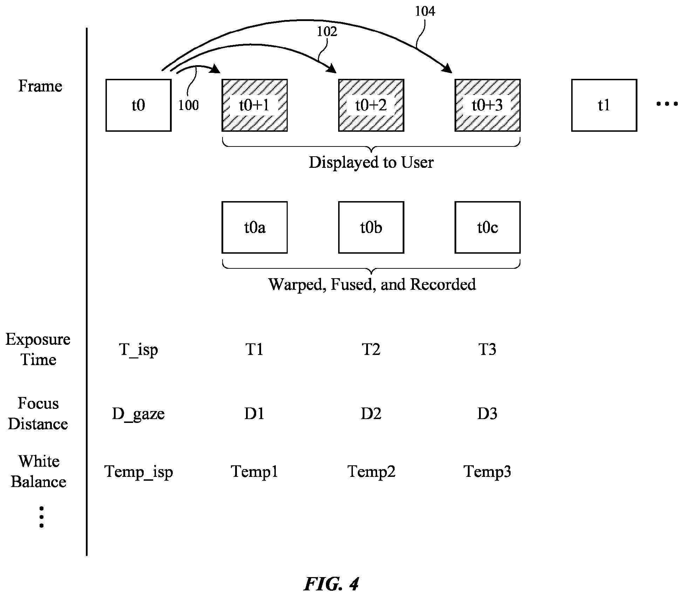

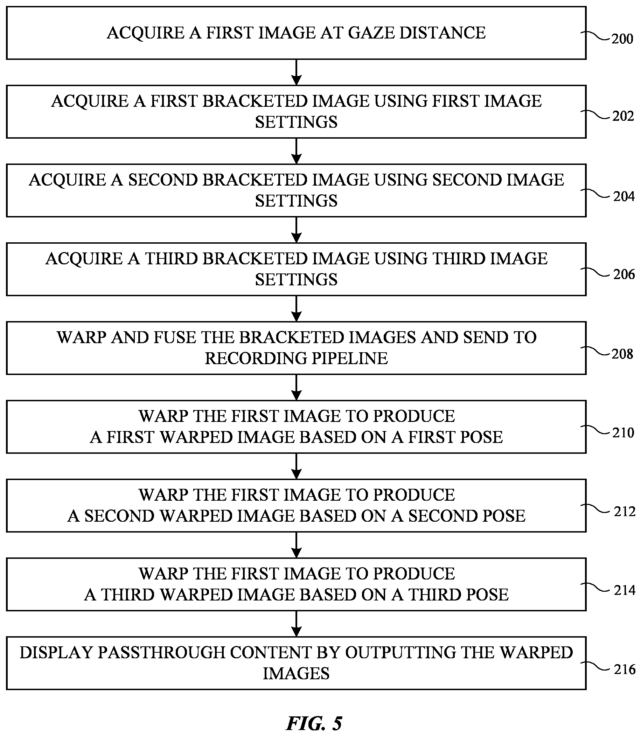

Details of the such image reprojection and bracketing operations can be further illustrated in connection with FIG. 4 and described in connection with the flowchart of FIG. 5. During the operations of block 200, device 10 can be configured to acquire a first (initial) image at a gaze distance. For example, one or more image sensors 50 can be configured to acquire the first image using a nominal exposure time (duration) T_isp as determined by ISP block 52 to produce a nominal exposure level, an (auto)focus distance determined based on the user's gaze D_gaze, a color temperature setting Temp_isp as determined by ISP block 52 to produce a target white balance. If the user is currently looking at an object located at a certain focusing distance from camera(s) 50, then the first image can be taken using that certain focusing distance. The first frame can be taken at time t0 (see, e.g., frame labeled "t0" in FIG. 4). The first (initial) image can be temporarily stored or buffered in cache 64 (see FIG. 3).

During the operations of block 202, device 10 can be configured to acquire a first bracketed image using first image (camera) settings. In the example of FIG. 4, one or more image sensors 50 can be configured to acquire the first bracketed image at time t0a (see frame labeled "t0a") using first image settings such as a first adjusted exposure time (duration) T1, a first adjusted focus distance D1, a first adjusted color temperature Temp1, and/or other adjusted image setting(s). The first adjusted exposure time T1 should be different from the nominal exposure time T_isp previously used to acquire the first (initial) image frame. The first adjusted focus distance D1 should be different from the gaze based focusing distance D_gaze. The first adjusted color temperature Temp1 should be different from the auto Temp_isp previously used to acquire the first image frame. If desired, other image related or camera settings can be adjusted when acquiring the first bracketed image at time t0a. The first bracketed image acquired using the first (adjusted) image settings is not displayed to the user but will be subsequently processed for recording purposes. The first bracketed image can be temporarily stored or buffered in cache 64.

During the operations of block 204, device 10 can be configured to acquire a second bracketed image using second image (camera) settings. In the example of FIG. 4, one or more image sensors 50 can be configured to acquire the second bracketed image at time t0b (see frame labeled "t0b") using second image settings such as a second adjusted exposure time T2, a second adjusted focus distance D2, a second adjusted color temperature Temp2, and/or other adjusted image setting(s). The second adjusted exposure time T2 should be different from T_isp and T1. The second adjusted focus distance D2 should be different D_gaze and D1. The second adjusted color temperature Temp2 should be different from Temp_isp and Temp1. If desired, other image related or camera settings can be adjusted when acquiring the second bracketed image at time t0b. The second bracketed image acquired using the second (adjusted) image settings is not displayed to the user but will be subsequently processed for recording purposes. The second bracketed image can be temporarily stored or buffered in cache 64.

During the operations of block 206, device 10 can be configured to acquire a third bracketed image using third image (camera) settings. In the example of FIG. 4, one or more image sensors 50 can be configured to acquire the third bracketed image at time t0c (see frame labeled "t0c") using third image settings such as a third adjusted exposure time T3, a third adjusted focus distance D3, a third adjusted color temperature Temp3, and/or other adjusted image setting(s). The third adjusted exposure time T3 should be different from T_isp, T1, and T2. The third adjusted focus distance D3 should be different D_gaze, D1, and D2. The third adjusted color temperature Temp3 should be different from Temp_isp, Temp1, and Temp2. If desired, other image related or cameras settings can be adjusted when acquiring the third bracketed image at time t0c. The third bracketed image acquired using the third (adjusted) image settings is not displayed to the user but will be subsequently processed for recording purposes. The third bracketed image can be temporarily stored or buffered in cache 64.

Capturing multiple (bracketed) images using different exposure settings, a technique sometimes referred to as exposure bracketing, can be technically advantageous and beneficial to provide high dynamic range content for the recording pipeline. Capturing multiple (bracketed) images using different focus settings, a technique sometimes referred to as focus bracketing, can be technically advantageous and beneficial to provide an extended (broad range) depth of field for the recording pipeline. Capturing multiple (bracketed) images using different color temperature settings, a technique sometimes referred to as white balance bracketing, can be technically advantageous and beneficial to provide a more accurate color reproduction for the recording pipeline. Additionally or alternatively, other types of image bracketing techniques can be employed, including but not limited to ISO bracketing (e.g., acquiring multiple images at different sensor sensitivity or ISO settings), aperture bracketing (e.g., acquiring multiple images at different lens aperture or f-stop settings), just to name a few. The example shown and described in connection with FIGS. 4 and 5 in which three bracketed images are acquired for recording purposes is illustrative. In general, device 10 can be configured to acquire three or more bracketed image frames, five or more bracketed image frames, seven or more bracketed image frames, or more than 10 bracketed image frames to help enhance the overall quality of the recorded content. All of the bracketing related operations described above can be orchestrated using a bracket control subsystem such as bracketing controller 62, as shown in the example of FIG. 3. The terms images, frames, and image frames are sometimes used interchangeably herein.

During the operations of block 208, the bracketed images previously stored in cache 64 can be conveyed to the recording pipeline 68 via image fusion block 66. Image fusion block 66 may be provided with a warp(ing) subsystem 67. Warper 67 can be implemented as a hardware or software component. Since the various bracketed image frames are acquired at different times (e.g., the first bracketed image is acquired at time t0a, the second bracketed image is acquired at time t0b, and the third bracketed image is acquired at time t0c), the three bracketed frames may be taken at slightly different head poses if the user's head moves at all during recording. Thus, to properly combine the multiple bracket images, warper 67 can warp the first, second, third, and/or other recently acquired bracketed images to a same new point at time t0c+, where t0c+ is some time after time t0c, and to the same head pose at time t0c+. The warping from t0a to t0c+ may be based on the pose at time t0a and the pose at time t0c+. The warping from t0b to t0c+ may be based on the pose at time t0b and the pose at time t0c+. The warping from t0c to t0c+ may be based on the pose at time t0c and the pose at time t0c+. After the bracket images have all been warped to time t0c+, the warped versions of the bracketed images - sometimes referred to herein as "warped bracketed images" - can then be combined or fused together to produce a high dynamic range (HDR) image with extended depth of field, accurate white balance, and/or other image enhancements for storage within recording pipeline 68. In general, block 66 can selectively warp N recently acquired bracketed frames to the same time and space, fuse the warped images, and then output the fused images to recording pipeline 68 for storage.

As described above, the bracketed images obtained during blocks 202-206 are taken at adjusted image sensor settings and should not be displayed to the user. The bracketed image frames can be obtained at the nominal system or camera frame rate. To maintain the passthrough video experience at the passthrough frame rate, at least some video frames has to be sent to the display pipeline to be displayed to the user in parallel with the acquisition of the bracketed image frames. In other words, although the operations of block 210, 212, and 214 are shown as occurring after the operations of blocks 202, 204, and 206, the operations of blocks 210, 212, and 214 can occur in parallel or simultaneously with the operations of blocks 202, 204, and 206.

During the operations of block 210, device 10 can warp the first image initially acquired during block 200 to produce a first warped image corresponding to time t0+1. For example, warping block 60 can warp or reproject the first image based on a difference between the detected head pose at time to and time t0+1 to produce the first warped (reprojected) image frame labeled "t0+1", as shown by arrow 100. This warping or reprojection can optionally be based on a measured pose output from sensors 54 or based on a predicted pose output from pose predictor 56 (see FIG. 3). Time t0+1 can be equal to or different than time t0a corresponding to the point in time when the first bracketed frame is being acquired for the recording pipeline.

During the operations of block 212, device 10 can warp the first image initially acquired during block 200 to produce a second warped image corresponding to time t0+2, occurring some time after t0+1. For example, warping block 60 can warp or reproject the first image based on a difference between the detected head pose at time t0 and time t0+2 to produce the second warped (reprojected) image frame labeled "t0+2", as shown by arrow 102. This warping or reprojection can optionally be based on a measured pose output from sensors 54 or based on a predicted pose output from pose predictor 56. Time t0+2 can be equal to or different than time t0b corresponding to the point in time when the second bracketed frame is being acquired for the recording pipeline.

During the operations of block 214, device 10 can warp the first image initially acquired during block 200 to produce a third warped image corresponding to time t0+3, occurring some time after t0+2. The time delta between t0+1 and t0+2 should be equal to the time delta between t0+2 and t0+3 to maintain a constant cadence for the display content. Warping block 60 can warp or reproject the first image based on a difference between the detected head pose at time t0 and time t0+3 to produce the third warped (reprojected) image frame labeled "t0+3", as shown by arrow 104. This warping or reprojection can optionally be based on a measured pose output from sensors 54 or based on a predicted pose output from pose predictor 56. Time t0+3 can be equal to or different than time t0c corresponding to the point in time when the third bracketed frame is being acquired for the recording pipeline.

During the operations of block 216, the warped images obtained from blocks 210, 212, and 214 can be output by the display pipeline (e.g., displayed to the user operating device 10). Displaying the reprojected images (e.g., images reprojected based on head pose over successive frames) while preventing the bracketed images to be shown to the user can be technically advantageous and beneficial to mask the otherwise reduced passthrough frame rate using reprojection. In general, the operations associated with the recording pipeline (e.g., blocks 202-208) and the operations associated with the display pipeline (e.g., blocks 210-216) can occur in parallel.

The operations of FIG. 5 can be repeated for a next (non-bracketed) image frame, as shown by a subsequent image frame labeled "t1" in FIG. 4 for processing one or more additional image frames for the recording and display pipelines. The example of FIGS. 4-5 in which three images at times t0+1, t0+2, and t0+3 are produced using reprojection for display purposes is illustrative. In general, device 10 can be configured to produce one or more reprojected frames, two or more reprojected frames, three or more reprojected frames, four to ten reprojected frames, or more than 10 reprojected frames for the display pipeline depending on the passthrough frame rate and the recording frame rate.

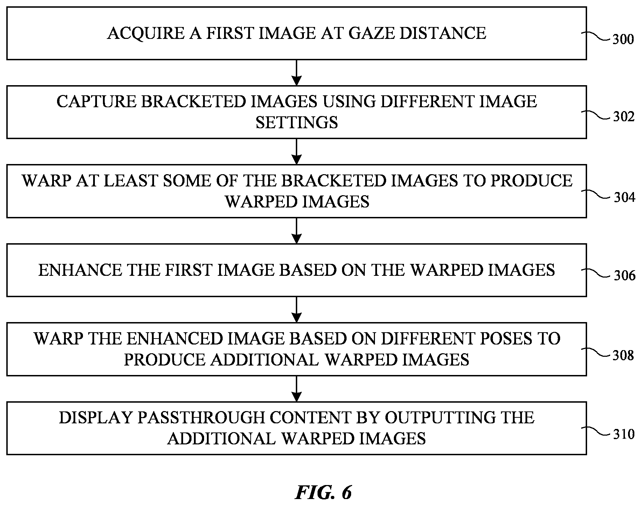

The operations described in connection with FIG. 5 in which the image frames being output by the display pipeline are separate from the bracketed images are exemplary. FIG. 6 is a flowchart of illustrative steps for performing image enhancements for the display pipeline based on the bracketed images in accordance with some embodiments. During the operations of block 300, device 10 can be configured to acquire a first (initial) image at a gaze distance. For example, one or more image sensors 50 can be configured to acquire the first image using a nominal exposure time (duration) T_isp as determined by ISP block 52 to produce a nominal exposure level, an (auto)focus distance determined based on the user's gaze D_gaze, a color temperature setting Temp_isp as determined by ISP block 52 to produce a target white balance. The first frame can be taken at time t0. The first (initial) image can be temporarily stored or buffered in cache 64 (see FIG. 3).

During the operations of block 302, device 10 can be configured to acquire one or more bracketed images using different image settings. For example, one or more image sensors 50 can be configured to capture multiple bracketed images using different exposure settings (e.g., varying exposure times or durations), using different focus settings (e.g., at varying focus distances), using different color temperatures (e.g., at varying white balance settings), and/or using other adjusted image sensor settings. For instance, the operations of blocks 202, 204, and 206 of the type described in connection with FIG. 5 can be performed during this time.

During the operations of block 304, device 10 can be configured to selectively warp at least some (one) of the bracketed images to produce corresponding one or more warped bracketed images. Since the bracketed images are acquired at times after the initial time t0, the bracketed images may be warped based on the pose at the time when they were taken and the pose at time t0. In other words, one or more bracketed images can be warped or reprojected to a common time t0 in the past.

The bracketed images can include additional information that can help enhance the first (initial) image. During the operations of block 306, the first image can be enhanced based on the one or more warped bracketed images obtained using the operations of block 304. For example, the bracketed images obtained using exposure bracketing techniques can include additional information in the highlight regions that can help recover detail in the brighter portions of the first image and/or additional information in the shadow regions to help recover detail in the darker portions. As another example, the bracketed images obtained using white balance bracketing techniques can include additional color information that can help correct the white balance of an image with mixed lighting conditions.

During the operations of block 308, device 10 can warp the enhanced image based on different poses to produce additional warped images. For example, during this time, the operations of blocks 210, 212, and 214 described in connection with FIG. 5 can be performed except the reprojection is based on an enhanced version of the first image obtained from block 306. The additional warped images are sometimes referred to and defined herein as reprojected versions of the enhanced image.

During the operations of block 310, the reprojected versions of the enhanced image obtained from block 308 can be output by the display pipeline (e.g., displayed to the user operating device 10). Displaying the reprojected images (e.g., images reprojected based on head pose over successive frames) while preventing the bracketed images (e.g., the bracketed images acquired during block 302) to be shown to the user can be technically advantageous and beneficial to mask the otherwise reduced passthrough frame rate using reprojection. Although not explicitly shown in FIG. 6, the bracketed frames obtained from block 302 can be warped, fused, and sent to the recording pipeline in parallel, as described in connection with block 208 in FIG. 5.

The example of FIG. 6 in which the bracketed images are warped to a common point in time in the past (e.g., time t0) is illustrative. Alternatively, the first image and one or more of the bracketed images can be warped to a common future point in time, sometimes referred to herein as a "presentation time," and based on the expected/predicted pose at the presentation time, and the image enhancement can be made in that space.

The operations of FIGS. 5 and 6 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

To help protect the privacy of users, any personal user information that is gathered by sensors may be handled using best practices. These best practices including meeting or exceeding any privacy regulations that are applicable. Opt-in and opt-out options and/or other options may be provided that allow users to control usage of their personal data.

In accordance with an aspect of the invention, a method of operating a head-mounted device includes: with one or more displays, outputting passthrough content at a passthrough frame rate; activating a recording mode to capture recorded content at a recording frame rate, different than the passthrough frame rate, while the one or more displays are outputting the passthrough content at the passthrough frame rate; with one or more image sensors, acquiring an image; and warping the image to produce a plurality of warped images, corresponding to different times, for the passthrough content.

Preferably, warping the image to produce the plurality of warped images includes warping the image to produce a first warped image based on a first measured or predicted pose of the head-mounted device at a first time and warping the image to produce a second warped image based on a second measured or predicted pose of the head-mounted device at a second time following the first time.

Preferably, warping the image to produce the plurality of warped images includes warping the image to produce a third warped image based on a third measured or predicted pose of the head-mounted device at a third time following the second time.

Preferably, the method includes: after acquiring the image, acquiring a first bracketed image using first adjusted image settings different than image settings used to acquire the image; and after acquiring the first bracketed image, acquiring a second bracketed image using second adjusted image settings different than the first adjusted image settings.

Preferably, the method includes: after acquiring the second bracketed image, acquiring a third bracketed image using third adjusted image settings different than the first and second adjusted image settings.

Preferably, outputting the passthrough content at the passthrough frame rate includes outputting the passthrough content without outputting the first, second, and third bracketed images.

Preferably, the image settings used to acquire the image optionally includes a given exposure duration, the first adjusted image settings used to acquire the first bracketed image optionally includes a first exposure duration different than the given exposure duration, the second adjusted image settings used to acquire the second bracketed image optionally includes a second exposure duration different than the given exposure duration and the first exposure duration, and the third adjusted image settings used to acquire the third bracketed image optionally includes a third exposure duration different than the given exposure duration, the first exposure duration, and the second exposure duration.

Preferably, the image settings used to acquire the image optionally includes a given focus distance, the first adjusted image settings used to acquire the first bracketed image optionally includes a first focus distance different than the given focus distance, the second adjusted image settings used to acquire the second bracketed image optionally includes a second focus distance different than the given focus distance and the first focus distance, and the third adjusted image settings used to acquire the third bracketed image optionally includes a third focus distance different than the given focus distance, the first focus distance, and the second focus distance.

Preferably, the method includes: with one or more gaze detection sensors, outputting gaze information that is used to determine the given focus distance for acquiring the image.

Preferably, the method includes: warping the first, second, and third bracketed images to a common point in time to produce corresponding warped bracketed images, and fusing the warped bracketed images to produce a fused image for the recorded content.

Preferably, the passthrough frame rate is greater than the recording frame rate.

Preferably, the passthrough frame rate is a multiple of the recording frame rate.

**In** accordance with an aspect of the invention, a method of operating a head-mounted device includes: with one or more cameras, acquiring a first image, warping the first image to produce reprojected versions of the first image; with one or more displays, outputting the reprojected versions of the first image; while the reprojected versions of the first image are being displayed to the user, acquiring bracketed images without outputting the bracketed images on the one or more displays; and generating recorded content based at least partly on the bracketed images.

Preferably, acquiring the bracketed images includes: acquiring a first bracketed image using first camera settings, acquiring a second bracketed image using second camera settings different than the first camera settings and acquiring a third bracketed image using third camera settings different than the first and second camera settings.

Preferably, warping the first image to produce reprojected versions of the first image includes: warping the first image based on a first pose of the head-mounted device at a first point in time, warping the first image based on a second pose of the head-mounted device at a second point in time after the first point in time, and warping the first image based on a third pose of the head-mounted device at a third point in time after the second point in time.

Preferably, the method includes: warping the first, second, and third bracketed images to a common point in time to produce corresponding warped bracketed images and combining the warped bracketed images to produce a fused image for the recorded content.

Preferably, the method includes: warping the first, second, and third bracketed images to a common point in time to produce corresponding warped bracketed images and enhancing the first image using information from at least some of the warped bracketed images.

In accordance with an aspect of the invention, a method of operating a head-mounted device includes: with one or more cameras, acquiring a first image and bracketed images associated with the first image; with a recording pipeline, storing recorded content generated based at least partly on the bracketed images; warping at least one of the bracketed images to produce at least one warped bracketed image; enhancing the first image based on the at least one warped bracketed image to produce an enhanced image; and with one or more displays, outputting reprojected versions of the enhanced image without outputting the bracketed images.

Preferably, the method includes warping the at least one of the bracketed images to a point in time at which the first image is acquired.

Preferably, the method includes warping the at least one of the bracketed images and the first image to a common point in time after a time at which the at least one of the bracket images is acquired.

The foregoing is merely illustrative and various modifications can be made to the described embodiments. The foregoing embodiments may be implemented individually or in any combination.

## Claims

1. A method of operating a head-mounted device, comprising:
with one or more displays, outputting passthrough content at a passthrough frame rate;
activating a recording mode to capture recorded content at a recording frame rate, different than the passthrough frame rate, while the one or more displays are outputting the passthrough content at the passthrough frame rate;
with one or more image sensors, acquiring an image; and
warping the image to produce a plurality of warped images, corresponding to different times, for the passthrough content.

2. The method of claim 1, wherein warping the image to produce the plurality of warped images comprises:
warping the image to produce a first warped image based on a first measured or predicted pose of the head-mounted device at a first time; and
warping the image to produce a second warped image based on a second measured or predicted pose of the head-mounted device at a second time following the first time.

3. The method of claim 2, wherein warping the image to produce the plurality of warped images further comprises:
warping the image to produce a third warped image based on a third measured or predicted pose of the head-mounted device at a third time following the second time.

4. The method of any preceding claim, further comprising:
after acquiring the image, acquiring a first bracketed image using first adjusted image settings different than image settings used to acquire the image; and
after acquiring the first bracketed image, acquiring a second bracketed image using second adjusted image settings different than the first adjusted image settings.

5. The method of claim 4, further comprising:
after acquiring the second bracketed image, acquiring a third bracketed image using third adjusted image settings different than the first and second adjusted image settings.

6. The method of claim 5, wherein outputting the passthrough content at the passthrough frame rate comprises outputting the passthrough content without outputting the first, second, and third bracketed images.

7. The method of claim 5 or claim 6, wherein:
the image settings used to acquire the image comprise a given exposure duration;
the first adjusted image settings used to acquire the first bracketed image comprise a first exposure duration different than the given exposure duration;
the second adjusted image settings used to acquire the second bracketed image comprise a second exposure duration different than the given exposure duration and the first exposure duration; and
the third adjusted image settings used to acquire the third bracketed image comprise a third exposure duration different than the given exposure duration, the first exposure duration, and the second exposure duration.

8. The method of any of claims 5 to 7, wherein:
the image settings used to acquire the image comprise a given focus distance;
the first adjusted image settings used to acquire the first bracketed image comprise a first focus distance different than the given focus distance;
the second adjusted image settings used to acquire the second bracketed image comprise a second focus distance different than the given focus distance and the first focus distance; and
the third adjusted image settings used to acquire the third bracketed image comprise a third focus distance different than the given focus distance, the first focus distance, and the second focus distance.

9. The method of claim 8, further comprising:
with one or more gaze detection sensors, outputting gaze information that is used to determine the given focus distance for acquiring the image.

10. The method of any of claims 5 to 9, further comprising:
warping the first, second, and third bracketed images to a common point in time to produce corresponding warped bracketed images; and
fusing the warped bracketed images to produce a fused image for the recorded content.

11. The method of any preceding claim, wherein the passthrough frame rate is a multiple of the recording frame rate.

12. A head-mounted device comprising:
one or more cameras configured to acquire a first image;
a warping subsystem configured to warp the first image to produce reprojected versions of the first image;
one or more displays configured to output the reprojected versions of the first image, wherein the one or more cameras are further configured to acquire bracketed images while the reprojected versions of the first image are being output by the one or more displays, and wherein the bracketed images are not output by the one or more displays; and
a recording subsystem configured to generate recorded content based at least partly on the bracketed images.

13. The head-mounted device of claim 12, wherein the one or more cameras are further configured to:
acquire a first bracketed image of the bracketed images using first camera settings;
acquire a second bracketed image of the bracketed images using second camera settings different than the first camera settings; and
acquire a third bracketed image of the bracketed images using third camera settings different than the first and second camera settings.

14. The head-mounted device of claim 12 or claim 13, wherein the warping subsystem is further configured to:
warp the first image based on a first pose of the head-mounted device at a first point in time;
warp the first image based on a second pose of the head-mounted device at a second point in time after the first point in time; and
warp the first image based on a third pose of the head-mounted device at a third point in time after the second point in time.

15. The head-mounted device of claim 13 or claim 14, wherein the warping subsystem is further configured to warp the first, second, and third bracketed images to a common point in time to produce corresponding warped bracketed images, further comprising:
means for combining the warped bracketed images to produce a fused image for the recorded content.
